(19)

Europäisches
Patentamt

European
Patent Office

Office européen
des brevets

(11) **EP 4 375 301 A1**

(12) **EUROPEAN PATENT APPLICATION**

(43) Date of publication:
**29.05.2024 Bulletin 2024/22**

(21) Application number: **22209499.7**

(22) Date of filing: **24.11.2022**

(51) International Patent Classification (IPC):
***C08B 37/00*** *(2006.01)*    ***C08L 5/00*** *(2006.01)*

(52) Cooperative Patent Classification (CPC):
**C08B 37/0003; C08B 37/0024; C08L 5/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ohly GmbH**
**22041 Hamburg (DE)**

(72) Inventors:
- **SPICKERMANN, Dominik**
  **22525 Hamburg (DE)**
- **KELSCH, Florian**
  **21075 Hamburg (DE)**
- **VAN RHEENEN, Mathilde**
  **33803 Steinhagen (DE)**

(74) Representative: **Uexküll & Stolberg**
**Partnerschaft von**
**Patent- und Rechtsanwälten mbB**
**Beselerstraße 4**
**22607 Hamburg (DE)**

(54) **PROCESS FOR THE PRODUCTION OF BETA-GLUCAN**

(57)  The present invention relates to a process for preparing a particulate β-glucan composition with a purity of more than 70% (w/w). The process comprises the step of incubating a disintegrated a cell wall fraction of a yeast hydrolysate or autolysate at high temperatures under alkaline conditions. The invention also provides a particulate β-glucan composition obtainable by the method of the invention. More specifically, the invention provides a particulate β-glucan composition having a purity of more than 70% (w/w) in which at least 90% of the particles in the composition have a size of less than 35 μm. Finally, the invention relates to the use of a particulate β-glucan composition of the invention as a food or feed additive.

EP 4 375 301 A1

**Description**

The present invention relates to a process for preparing a particulate β-glucan composition with a purity of more than 70% (w/w). The process comprises the step of incubating a disintegrated a cell wall fraction of a yeast hydrolysate or autolysate at high temperatures under alkaline conditions. The invention also provides a particulate β-glucan composition obtainable by the method of the invention. More specifically, the invention provides a particulate β-glucan composition having a purity of more than 70% (w/w) in which at least 90% of the particles in the composition have a size of less than 35 μm. Finally, the invention relates to the use of a particulate β-glucan composition of the invention as a food or feed additive.

## BACKGROUND OF THE INVENTION

β-glucans are a heterogeneous group of natural glucose polymers that naturally occur in yeasts and other organisms. Several animal studies as well as clinical trials in humans confirmed that β-glucans from yeast are safe and have a positive effect on the function of the immune system. Owing to their ability to stimulate the immune system, β-glucans are used today in human and veterinary medicine and also as supplements in food and feed.

To provide a health-strengthening effect on the immune system, β-glucans must be digested in high amounts. Accordingly, it is generally desirable for manufacturers to provide preparations of β-glucans which are essentially pure and highly concentrated. For example, according to the "Chinese glucan standard" (QB/T 4572-2013), which is a regulatory guideline from the Chinese government defining the minimum standards of yeast β-glucan products in terms of purity and composition, the purity of a β-glucan product should not fall below 70% (w/w) β-glucan based on dry matter (DM).

However, the preparation of a β-glucan product having a purity of 70% (w/w) is technically complicated. Purified β-glucans in such high concentrations are normally prepared from yeasts by a liquid-solid extraction using organic solvents, such as ethanol. When used in an industrial setting, this process is not only cost-extensive, but also harmful to the environment. In addition, traces of the organic solvent used in the extraction process can remain in the final product which may then cause regulatory issues.

There is hence a need for new β-glucan manufacturing processes that are economically attractive and do not rely on the use of organic solvents. The new β-glucan manufacturing processes should provide an essentially pure and highly concentrated product which can be directly used as a food or feed additive or as a health-stimulating preparation without further costly purification or downstream processing steps.

## DESCRIPTION OF THE INVENTION

It has been found that the isolation of β-glucans by disintegrating yeast cell walls by mechanical means followed by solid-liquid extraction as well as heat and alkaline washing provides a highly pure and concentrated β-glucan product. The invention therefore provides a new process for preparing β-glucans from yeast cell walls which is cheap, easy to implement, and environmentally friendly. The product resulting from the new process complies with the Chinese glucan standard and is free of organic solvents.

In a first aspect, the invention provides for a new process for preparing a β-glucan composition with a purity of at least 70% (w/w), said method comprising:

(a) providing a yeast cell wall fraction with a dry matter content of 9-22% (w/w) that has been disintegrated by a milling or grinding device;

(b) incubating the cell wall fraction in suspension at a temperature of at least 85°C for a time period of at least 45 minutes under alkaline conditions;

(c) washing the cell wall fraction;

(d) incubating the cell wall fraction at a temperature of at least 85°C for a time period of at least 30 minutes; and

(e) washing the cell wall fraction until the solid content in the supernatant is less than 0.1% to obtain the β-glucan composition.

In step (a) of the above method, a yeast cell wall fraction is provided with a dry matter content of 9-22% (w/w) that has been disintegrated by a milling or grinding device. As used herein, a yeast cell wall fraction is understood to refer to the fraction that contains the cell wall of the yeast cell after disruption of the cell. Suitable cell wall fractions are obtained as a side product during the production of yeast hydrolysates or yeast autolysates. Yeast hydrolysates are produced by the addition of exogenous enzymes like proteases or other hydrolyzing enzymes. The addition of the exogenous enzymes results in cell disruption and release of the water-soluble components from the cell lumen, such as proteins, peptides, amino acids, carbohydrates, nucleic acids, vitamins, and salts. Accordingly, cell hydrolysis results in a fraction comprising the water-soluble fraction (referred to as yeast extract) and a water-insoluble fraction comprising essentially cell wall components (referred to as the cell wall fraction). In comparison, yeast autolysates are produced by subjecting yeast cell to heat and/or starving which induces the lysis of the cells by endogenous enzymes like proteases, peptidases and nucleases. Like in the case of hydrolysis, autolysis results in a fraction comprising the water-soluble fraction and a cell wall fraction.

According to the invention, the yeast cell wall fraction applied in step (a) of the above method has a dry matter content of 9-22% and preferably 10-20% (w/w). For example, the dry matter content of the yeast cell wall fraction can be 10-22% (w/w), 10-21% (w/w), 10-20% (w/w), 10-19% (w/w), 10-18% (w/w), 10-17% (w/w), 10-16% (w/w), 10-15% (w/w), 10-14% (w/w), 10-13% (w/w), or 10-12% (w/w). A dry matter content of about 11% (w/w), about 12% (w/w), or about 13% (w/w) is particularly preferred.

The dry matter content of a composition, such as a yeast cell culture, can be determined in accordance with standard procedures using commercially available devices, for example, the Moisture Analyzer (Mettler-Toledo GmbH, Gießen, Germany). Once the dry matter content of a starting yeast cell wall fraction has been determined, it can be adjusted to a predetermined value either by diluting or concentrating the culture. Alternatively, the dry matter content can be measured and calculated as described in US 2011/0223287. Briefly, 2 mL of a yeast suspension are placed in a pre-weighed aluminum dish, followed by drying at 105°C for 4 hours. The post-drying weight (i.e. the weight after drying of the yeast) is measured, and the weight of solids (dried yeast biomass weight, unit: g/L) is calculated according to the following equation:

$$Weight\ after\ drying\ of\ yeast\ -\ weight\ of\ aluminum$$
$$dish\ =\ weight\ of\ dried\ yeast\ biomass$$

According to the invention, the cell wall fraction used in step (a) has been disintegrated in a milling or grinding device. Alternatively, the method of the invention may of course also include the step of milling or grinding. Thus, in a preferred aspect, the method of the invention comprises, instead of the above step (a), the following steps:

(a1) providing a yeast cell wall fraction with a dry matter content of 9-22% (w/w); and

(a2) disintegrating the cell wall fraction in a milling or grinding device.

Where the method comprises the above steps (a1) and (a2), the dry matter content of the composition is the same in both of these steps, i.e. about 9-22% (w/w) as outlined above.

Milling or grinding devices that can be used for disintegrating the cell wall fraction of yeast hydrolysates or autolysates comprise roller mills, bead mills and high-compressions mills. The use of a bead mill is particularly preferred for providing the cell wall fraction. Advantageously, the use of a bead mill does not require any additives that could impair the food grade quality of the resulting glucan compositions. A bead mill normally comprises a chamber that is filled with beads which are moved around by a set of impeller fins. When a yeast cell wall fraction is passed through the chamber, larger cell wall portions are further reduced in size upon collision with the beads. The efficiency of size reduction can be adjusted by routine measures, for example, by changing the flow rate which determines how fast the suspension is passed through the chamber of the bead mill. Normally, a low flow rate leads to high disintegration efficiency, since the cell wall portions have more time to collide with the grinding beads. Dependent on the volume of the chamber of the bead mill, flow rates of at least 10 kg/h can be selected, such at least 20 kg/h, at least 25 kg/h, or at least 50 kg/h. For some bead mills, a flow rate of at least 100 kg/h, at least 250 kg/h, at least 500 kg/h, at least 750 kg/h, at least 1000 kg/h, at least 1500 kg/h, at least 2000 kg/h, at least 2500 kg/h, and up to 3000 kg/h can be used.

Bead mills are offered by different manufacturers, for example, the Dyno®-Mill Multi Lab Wab from Willy A. Bachofen AG (Muttenz, Switzerland).

The disintegration of the cell wall fraction is also influenced by the bead material and size. Beads can be made of different materials, e.g. glass, ceramic or plastic. Particularly good results have been achieved with zirconium oxide beads, such as yttria-stabilized zirconium oxide beads. In addition, these beads are significantly more durable compared to glass beads. The beads used for disrupting the yeast cells, e.g. the zirconium oxide beads, may have different sizes which normally range from 0.2-2.0 mm. It has been found that for disintegration of yeast cell walls, a bead size of 0.25-0.35 mm leads to particularly good results. Accordingly a bead size of 0.25-0.35 mm is particular preferred.

Bead filling volumes of between 30-80% may be used, for example, about 30%, about 35%, about 40%, about 45%, about 50%, about 55%, about 60%, about 65%, about 70%, about 75%, or about 80%. A bead filling volume of between 50-80% is particularly preferred according to the invention.

The disintegration of the cell wall fraction is also influenced by other factors, e.g. factors relating to the architecture of the impeller. The impeller is normally mounted with fins to move the beads. For improved cell wall disintegration, it is for example possible to provide accelerators onto the rotor. Accelerators are designed to increase the frequency of bead collisions. The impeller rotation speed is another parameter that may be adjusted to improve cell wall disintegration. A rotor speed of between 1-30 m/s can be used, for example, about 1 m/s, about 2 m/s, about 3 m/s, about 4 m/s, about 5 m/s, about 6 m/s, about 7 m/s, about 8 m/s, about 9 m/s, about 10 m/s, about 11 m/s, about 12 m/s, about 13 m/s, about 14 m/s, about 15 m/s, about 16 m/s, about 17 m/s, about 18 m/s, about 19 m/s, about 20 m/s, about 21 m/s, about 22 m/s, about 23 m/s, about 24 m/s, about 25 m/s, about 26 m/s, about 27 m/s, about 28 m/s, about 29 m/s, or about 30 m/s. A skilled person would be able to find optimum parameters for cell wall disintegration in a bead mill by routine experimentation.

The type of yeast that is used for preparing the β-glucan composition of the invention is not specifically limited. Yeast cells which can be used for the method of the invention may comprise, for example, a yeast belonging to the genus *Saccharomyces,* such as *S. cerevisiae, S. chevalieri, S. boulardii, S. bayanus, S. italicus, S. delbrueckii, S. rosei, S. microellipsodes, S. carlsbergensis, S. bisporus, S. fermentati, S. rouxii,* or *S. uvarum;* a yeast belonging to the genus *Schizosaccharomyces,* such as *S. japonicus, S. kambucha, S. octosporus,* or *S. pombe;* a yeast belonging to the genus *Hansenula,* such as *H. wingei, H. arni, H. henricii, H. americana, H. canadiensis, H. capsulata,* or *H. polymorpha;* a yeast belonging to the genus *Candida,* such as *C. albicans, C. utilis, C. boidinii, C. stellatoidea, C. famata, C. tropicalis, C. glabrata,* or *C. parapsilosis;* a yeast belonging to the genus *Pichia,* such as *P. pastoris, P. kluyveri, P. polymorpha, P. barkeri, P. cactophila, P. rhodanensis, P. cecembensis, P. cephalocereana, P. eremophilia, P. fermentans,* or *P. kudriavzevii;* a yeast belonging to the genus *Kluyveromyces,* such as *K. marxianus;* and a yeast belonging to the genus *Torulopsis,* such as *T. bovina,* or *T. glabrata.*

In a particularly preferred embodiment, the method of the invention uses a yeast cell wall fraction from cells of the genus *Saccharomyces,* more preferably from *S. cerevisiae.*

In step (b) of the above method, the cell wall fraction is incubated at a temperature of at least 85°C for a time period of at least 45 minutes under alkaline conditions. In this step, the disintegrated cell wall fraction is normally suspended in a small volume of a fluid, preferably water.

The temperature during the incubation can be, for example, about 85°C, about 90°C, or higher. For example, the temperature in this method step can be set to about 85°C, about 86°C, about 87°C, about 88°C, about 89°C, about 90°C, about 91°C, about 92°C, about 93°C, about 94°C, about 95°C, about 96°C, about 97°C, about 98°C, or about 99°C. A temperature of between 90°C and 99°C, and more particularly between 90°C and 95°C, is preferred. The incubation of the material in step (b) is preferably performed for at least 1 hour, at least 2 hours, at least 3 hours, at least 4 hours, at least 5 hours, at least 6 hours, at least 7 hours, at least 8 hours, at least 9 hours, or at least 10 hours, or longer. It is particularly preferred that the incubation is carried out for at least 6 hours.

Also, it is preferred that the incubation is performed under agitation, e.g. by using a stirrer.

The incubation step (b) is performed under alkaline conditions, which means that the pH of the solution or buffer used in this step is higher than pH 7.0. Preferably, the incubation is carried out at a pH of 11.0 or higher, 11.5 or higher, 12.0 or higher, 12.5 or higher, 13.0 or higher, 13.5 or higher, or 14.0 or higher. Preferably, the pH is adjusted with NaOH.

In a particularly preferred embodiment of the invention, the cell wall fraction is incubated in step (b) for a period of 2-6 hours at a temperature of 85°C to 99°C and a pH of 9 or more. In another particularly preferred embodiment of the invention, the cell wall fraction is incubated in step (b) for a period of 3-4 hours at a temperature of 90°C to 99°C and a pH of 10 or more. In yet another particularly preferred embodiment of the invention, the cell wall fraction is incubated in step (b) for a period of 2-4 hours at a temperature of 95-99°C and a pH of 11 or more.

In step (c) of the above method, the cell wall fraction heated under alkaline conditions is washed to remove undesirable compounds, including amino acids, salts and nucleotides. Washing can be performed with water or a buffered solution, such as phosphate buffer. Preferably, the washing step is performed with water. Washing can be achieved by adding water or a washing buffer to the heat-treated cell wall fraction obtained from step (b) followed by separation or centrifugation of the cell wall fraction and subsequent removal of the clear phase or supernatant.

The suspension is preferably stirred during washing. At least one washing step is performed in step (c). It is however preferred that more than one washing step is performed, such as 2, 3, 4, 5 or 6 washing steps. The washing steps can be performed at room temperature, i.e. at a temperature of 20°C or more. However, a higher temperature of the washing buffer or water is preferred, as it increases the effectiveness of the washing step. According to the invention, it is preferred to carry out the washing step at a temperature of 60°C or more. For example, the washing step can be carried out at about 85°C, about 86°C, about 87°C, about 88°C, about 89°C, about 90°C, about 91°C, about 92°C, about 93°C, about 94°C, about 95°C, about 96°C, about 97°C, about 98°C, or about 99°C.

Following washing, the cell wall fraction is incubated in step (d) of the above method at a temperature of at least 85°C for a time period of at least 30 minutes. The temperature in this step can be the same as described above in connection with step (b). That is, the temperature can be, for example, about 85°C, about 90°C, or higher. For example, the temperature in this method step can be set to about 85°C, about 86°C, about 87°C, about 88°C, about 89°C, about 90°C, about 91°C, about 92°C, about 93°C, about 94°C, about 95°C, about 96°C, about 97°C, about 98°C, or about 99°C. A temperature of between 90°C and 99°C is particularly preferred. The incubation in step (d) is preferably performed for at least 45 minutes or longer. It is even more preferred that the incubation is maintained for at least 1 hour, at least 2 hours, at least 3 hours, at least 4 hours, at least 5 hours, at least 6 hours or longer. The incubation in step (d) can be, but does not have to be, performed under alkaline conditions. If alkaline conditions are applied, the pH in this step is preferably adjusted to at least 8.5, more preferably to at least 9.0, 9.5, 10.0, 10.5, 11.0, 11.5, 12.0, 12.5, 13.0, 13.5, or at least 14.0.

After the second incubation, the cell wall fraction is washed again for several times in step (e) until the solid content in the supernatant (clear phase) is less than 0.1%. Preferably, the washing in step (e) is continued until the solid content in the supernatant is less than about 0.09%, about 0.09%, about 0.08%, about 0.07%, about 0.06%, and more preferably less than about 0.05%.

By the extensive washing in step (e), the β-glucan composition of the invention is obtained. Preferably, the washing in step (e) is repeated 3 times. It is however more preferred that the washing in step (e) is repeated 4, 5, 6, 7, 8, 9, 10, 11, or 12 times. Again, the washing steps can be performed at room temperature, i.e. at a temperature of 20°C or more. However, a higher temperature of the washing buffer or water is preferred, as it increases the effectiveness of the washing step. According to the invention, it is preferred to carry out the washing step at a temperature of 60°C or more. For example, the washing step can be carried out at about 85°C, about 86°C, about 87°C, about 88°C, about 89°C, about 90°C, about 91°C, about 92°C, about 93°C, about 94°C, about 95°C, about 96°C, about 97°C, about 98°C, or about 99°C.

The process of the invention may optionally comprise one or more of the following steps:

(g) adjusting the pH to 6.5-7.5, and/or

(h) drying or spray-drying the β-glucan composition, and/or

(i) sterilizing the β-glucan composition.

Where the β-glucan composition prepared by the above method is intended for use as a food additive or a formulation for ingestion, it is advantageous to adapt its pH to a value between 6.5 and 7.5.

It is particularly advantageous for storing and other purposes to subject the β-glucan composition prepared by the above method to drying or spray-drying. The principle of spray-drying is based on the dispersion of a solution into fine droplets which are introduced into a flow of hot air. The solvent evaporates from the substrate droplets so that dry product clusters remain. Standard spray drying devices can be used, such as the Mini Spray Dryer B-290 from Büchi Labortechnik GmbH (Essen, Germany) or the Mobile Minor™ Spray Dryer from GEA (Berlin, Germany). Freeze-drying or lyophilization is a process which removes water from a product to extend shelf life. Freeze drying encompasses freezing the product and reducing the pressure to allow the frozen water in the material to sublimate. Various methods can be applied for freezing the product. For example, freezing can be achieved by using a standard freezer or a chilled bath. Cooling the product below its triple point ensures that sublimation will occur upon heating under vacuum. To prevent the formation of large crystals that may damage the structure of the product to be dried, freezing is done rapidly. About 95% of the water in the product is removed when the frozen water sublimates. Most materials can be dried to 1-5% residual moisture. Standard freeze drying devices can be used, such as the Lyovac™ devices from GEA (Berlin, Germany), the Gamma 2-20 Freeze dryer LCM-1 from Christ (Osterode am Harz, Germany), or the Christ Martin™ Alpha 1-2 Lyophilisator from Fisher Scientific GmbH (Schwerte, Germany).

In another aspect, the present invention provides a β-glucan composition obtainable by a method as described above, preferably a particulate β-glucan composition. The β-glucan composition of the invention has a degree of purity at least 70% (w/w) based on dry matter. Preferably, the purity of the β-glucan composition is about 71% (w/w), about 72% (w/w), about 73% (w/w), about 74% (w/w), about 75% (w/w), about 76% (w/w), about 77% (w/w), about 78% (w/w), about 79% (w/w), or about 80% (w/w) based on dry matter. Purity is preferably measured by the method of Freimund et al. (2005), Eur Food Res Technol, 220:101-105, which was however modified in that 72.5% trifluoroacetic acid was used and hydrolysis was performed for 2h at 100°C under stirring.

Preferably, the β-glucan composition obtainable by the method as described above has been dried to provide a particulate composition. The particulate β-glucan composition has a particularly small particle size. Preferably, about 90% or more of the particles in the composition have a size of less than 35 μm, more preferably less than 32 μm or less than 30 μm. More preferably, about 91%, about 92%, about 93%, about 94%, or about 95% or more of the particles in the composition have a size of less than 35 μm, more preferably less than 32 μm or less than 30 μm. In another preferred embodiment, about 50% or more of the particles in the composition have a size of less than 15 μm, more preferably less than 12 μm or less than 10 μm. More preferably, about 51%, about 52%, about 53%, about 54%, or about 55% or more of the particles in the composition have a size of less than 15 $\mu$m, more preferably less than 12 $\mu$m or less than 10 $\mu$m. Particle size analysis is preferably measured by laser diffraction as described in the Standard for particle size analysis ISO 13320:2020-01 using a Malvern Mastersizer2000 device. Ethanol or isopropanol is preferably used as a solvent.

The particulate $\beta$-glucan composition obtainable by the method of the invention preferably is water-insoluble and free of organic solvents.

## EXAMPLE

The following example is provided in order to illustrate the invention. It should however be understood that the scope of the invention is not limited by the example. A skilled person will understand that several modifications can be made without deviating from the scope of the invention.

Example 1: Preparation of a particulate $\beta$-glucan composition

*S. cerevisiae* strain ATCC 204508 was grown in YPD medium (1% yeast extract, 2% peptone, and 2% glucose) overnight at 30°C. The next morning, fresh YPD-medium was added to the yeast cells to provide an $OD_{600}$ of 0.1. The cells were cultured at 30°C until an $OD_{600}$ of 1.0 was reached. Subsequently, the exponentially growing yeast cell culture was cultured for additional 10 hours.

The yeast cells were concentrated using a standard separator (NA7 separator from Westfalia Separator AG, Germany) and washed twice with water. The yeast cells in the bottom phase were retained, while the light clear phase was discarded. To reach the initial volume again, the removed volume of the clear phase was replaced by fresh, room-temperature tap water which is added to the cells. In this way, a yeast cell substrate having a dry matter content of about 18% (w/w) was obtained.

To start the autolysis process, the yeast cell substrate was heated to 55°C and the pH was adjusted to 5.4 by adding 50 % sulfuric acid. Afterwards, the yeast cell substrate was incubated at these conditions for 20 hours. The soluble yeast extract was removed from the insoluble yeast cell wall by washing the autolysis reaction broth twice, as described above, using a standard separator. About 140L of the washed yeast cell wall was used as substrate for the following purification process. The pH of the substrate was 4.7 and the dry matter content about 15.3%.

The mechanical disintegration of the yeast cell walls was then performed in a Dyno®-Mill Multi Lab mill from Willy A. Bachofen AG (Muttenz, Switzerland) using yttria-stabilized zirconium oxide beads with a size of 0.25-0.35 mm. The flow rate was set to 8 kg/h and the rotor speed to 20 m/s. The bead filling volume was set to 65%.

The disintegrated yeast cell wall was heated to 95°C and about 5.6 kg of 45 % NaOH was added, resulting in a pH of 12.8. Afterwards, the yeast cell wall was incubated at 95°C for 5 hours under rigorous stirring.

After the hot alkaline incubation, the cell wall was washed once, as described above, using a NA7 separator from Westfalia Separator AG, Germany. The removed clear phase volume was about 120L. As described above, it was replaced by fresh room-temperature tap water.

The washed yeast cell wall was then incubated again at 95°C for 30 minutes under rigorous stirring. After the hot incubation, the cell wall got washed nine times with water, as described above, using a NA7 separator from Westfalia Separator AG, Germany. After the 9 times washing process, the product had a dry matter content of 0.28% and a pH of 7.7.

The final cell wall product was spray dried using a Mini Spray Dryer B-290 from Büchi Labortechnik GmbH (Essen, Germany) with a constant input temperature between of 240±2°C and output temperature at 90±2 °C.

The resulting powder was analysed for its glucan content by the company MQD GmbH (Güstrow, Germany). The measurement was conducted according to the method Freimund et al. (2005), Eur Food Res Technol, 220:101-105, which was however modified in that 72.5% trifluoroacetic acid was used and hydrolysis was performed for 2h at 100°C under stirring. For monosaccharide determination (glucose) a standard enzyme kit from Megazyme was used according to the recommendation of the manufacturer.

The results confirmed a glucan concentration of 75.9 % per dry matter.

Example 2: Analysis of the $\beta$-glucan composition

The particulate $\beta$-glucan composition obtained from Example 1 was then analyzed to determine the size distribution of the particles. The measurement was performed by a laser diffraction method according to International Standard ISO 13320 (Second Edition 2020-01), using isopropanol as dispersant.

The results confirmed that 90% of all particles (= d(0.9)) were of a size of 22.20 $\mu$m or smaller, and 50% of all particles (= d(0.5))were of a size of 8.61 $\mu$m or smaller.

Example 3: Antibody Formation Assay

The β-glucan composition obtained from Example 1 was examined for its capability to induce antibodies. Glucans have been reported to exert an effect on an antibody response in animals. Specifically, studies have showed that the glucan can be used for stimulating both a cellular and humoral immune response during vaccination. Accordingly, it was tested whether the administration of different β-glucan compositions together with ovalbumin as an antigen enhances antibody production. For this purpose, the β-glucan composition obtained from Example 1 was compared to commercially available products including M-Gard™ (Lallemand, Toulouse, France) and Aleta™ (Kemin Food Technologies EMEA, Herentals, Belgium). Mice were injected twice (two weeks apart) with 100 μg of albumin and the serum of the animals was collected 7 days after last injection. Starting with the first albumin injection, the experimental groups received daily i.p. injections of different β-glucan compositions. The level of specific antibodies against ovalbumin was detected by ELISA. As a positive control, the combination of ovalbumin and Freund's adjuvant was used.

Results: The β-glucan composition obtained from Example 1 (BG#3) had the strongest effect on antibody production, along with the product from Kemin which is derived from Algae.

Example 4: Phagocytosis Assay

The β-glucan composition obtained from Example 1 was then examined for its capability to stimulate cellular immunity. Glucans can act as stimulators of cellular immunity, with macrophages and neutrophils being the most important target. The potential activities of glucans on cellular immunity can be assessed by using synthetic polymeric microspheres of 2-hydroxyethyl methacrylate (HEMA) that are contacted with peripheral blood neutrophils from mice, and it is then determined whether neutrophils from mice that received earlier glucan injections stimulate phagocytosis of the neutrophils. For this purpose mice were injected with β-glucan, β-glucan /resveratrol or PBS as a control. Subsequently, peripheral blood cells were isolated from the mice and incubated in vitro with 0.05 ml HEMA ($5 \times 10^8$/ml). The test tubes were incubated at 37°C for 60 min with intermittent shaking. Smears were stained with Wright stain. Cells that internalized three or more HEMA particles were considered phagocytosis positive. All experiments were performed in triplicate. At least 200 cells in 60 high power fields were examined in each experiment.

Results: The β-glucan composition obtained from Example 1 (BG#3) showed a particular strong effect on phagocytosis, along with the product from Kemin.

Example 5: Nitrite Oxide Production Assay

The β-glucan composition obtained from Example 1 was also examined for NO formation. The process of phagocytosis is known to involve, apart from the internalization step itself, an outburst of metabolic activity ("oxidative burst") which includes amongst others a dramatically increased production of active oxygen species, such as NO. The production of active oxygen species is necessary for the intracellular destruction of internalized microorganism within the cell and can thus be used as a measure for an immune reaction. NO formation was measured in both in fresh mouse neutrophils and in the established human neutrophil cell line HL-60. Mice were challenged with 100 μg of individual glucans 24 hrs earlier. Cell lines were incubated with 1 μg/ml of glucans for 24 hrs. For nitrite formation a technique described by Green and Nacy (Green SJ, Nacy CA. Curr Opin Infect Dis 1993; 6: 384-396). LPS (Sigma) was used as a triggering agent in this set-up.

Results: The β-glucan composition obtained from Example 1 (BG#3) induced on NO production just as strong as the Algae product from Kemin.

**Claims**

1. Method for preparing a β-glucan composition with a purity of at least 70% (w/w), said method comprising:

   (a) providing a yeast cell wall fraction with a dry matter content of 9-22% (w/w) that has been disintegrated by a milling or grinding device;
   (b) incubating the cell wall fraction in suspension at a temperature of at least 85°C for a time period of at least 45 minutes under alkaline conditions;
   (c) washing the cell wall fraction;
   (d) incubating the cell wall fraction at a temperature of at least 85°C for a time period of at least 30 minutes; and
   (e) washing the cell wall fraction several times until the solid content in the supernatant is less than 0.1% to obtain the β-glucan composition.

2. Method of claim 1, wherein step (a) comprises the steps of:

   (a1) providing a yeast cell wall fraction with a dry matter content of 9-22% (w/w); and
   (a2) disintegrating the cell wall fraction in a milling or grinding device.

3. Method of claim 2, wherein the milling device used in step (a2) is a bead mill.

4. Method of any of claims 2-3, wherein milling the yeast cell wall fraction in step (a2) is performed with beads having a size of 0.2-0.5 μM, preferably 0.25-0.35 μM.

5. Method of any of claims 2-4, wherein milling the yeast cell wall fraction in step (a2) is performed at a flow rate of 8-20 kg/h.

6. Method of any of claims 1-5, wherein the cell wall fraction in step (b) or (d) is incubated at a temperature of at least 90°C, preferably 95°C.

7. Method of any of claims 1-6, wherein the cell wall fraction in step (b) is incubated for a time period of at least 1 hour, at least 2 hours, preferably 3 hours, 4, hours, 5 hours, or 6 hours.

8. Method of any of claims 1-7, wherein the cell wall fraction in step (b) is incubated for at least 4 hours at a temperature of at least 95°C.

9. Method of any of claims 1-8, wherein said method further comprises one or more of the following steps:

   (f) adjusting the pH to 6.5-7.5, and/or
   (g) drying or spray-drying the β-glucan composition, and/or
   (h) sterilizing the β-glucan composition.

10. Method of any of claims 1-9, wherein step (e) comprises at least 5 consecutive washing steps.

11. Particulate β-glucan composition obtainable by a method of any of claims 1-10.

12. Particulate β-glucan composition having a purity of more than 70% (w/w), wherein 90% of the particles in the composition have a size of less than 35 μm, and wherein preferably 50% of the particles in the composition have a size of less than 15 μm.

13. Particulate β-glucan composition of any of claims 11-12, wherein the composition is water-insoluble.

14. Particulate β-glucan composition of any of claims 11-13, wherein the composition is free of organic solvents.

15. Particulate β-glucan composition of any of claims 11-14, wherein the composition has a purity of more than 72% (w/w), and preferably more than 73%, 74%, or 75% (w/w).

16. Use of a particulate β-glucan composition of any of claims 11-15 as a food or feed additive or as a health-promoting composition.

Europäisches
Patentamt

European
Patent Office

Office européen
des brevets

## EUROPEAN SEARCH REPORT

Application Number

**EP 22 20 9499**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BZDUCHA-WRÓBEL ANNA ET AL: "Valorization of Deproteinated Potato Juice Water into-Glucan Preparation ofOrigin: Comparative Study of Preparations Obtained by Two Isolation Methods", WASTE AND BIOMASS VALORIZATION, SPRINGER NETHERLANDS, NL, vol. 11, no. 7, 20 March 2019 (2019-03-20) , pages 3257-3271, XP037159080, ISSN: 1877-2641, DOI: 10.1007/S12649-019-00641-W [retrieved on 2019-03-20] * abstract; page3260, col.1, para.3-col.2, para.1; table 3; conclusions * | 1-16 | INV. C08B37/00 C08L5/00 |
| X | SAOEWANEE THAMMAKITI ET AL: "Preparation of spent brewer's yeast beta-glucans for potential applications in the food industry", INTERNATIONAL JOURNAL OF FOOD SCIENCE AND TECHNOLOGY, vol. 39, 1 January 2004 (2004-01-01), pages 21-29, XP055704411, * abstract; table 1 * | 11-16 | TECHNICAL FIELDS SEARCHED (IPC) C08B C08L |

The present search report has been drawn up for all claims

| Place of search | Date of completion of the search | Examiner |
|---|---|---|
| Munich | 19 April 2023 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110223287 A

**Non-patent literature cited in the description**

- **FREIMUND et al.** *Eur Food Res Technol,* 2005, vol. 220, 101-105

- **GREEN SJ ; NACY CA.** *Curr Opin Infect Dis,* 1993, vol. 6, 384-396